# EUROPÄISCHE PATENTSCHRIFT

(11) **EP 1 894 714 B1**
(45) Veröffentlichungstag und Bekanntmachung des Hinweises auf die Patenterteilung: **31.10.2012**
(21) Anmeldenummer: 07016972.7
(22) Anmeldetag: 30.08.2007
(51) Int. Cl.: B32B 27/10, B65D 65/40, B65D 81/34

(54) **Verbundpapier sowie Beutel für Lebensmittel, insbesondere für vorgebackene Backwaren, enthaltend das Verbundpapier, und ein Verfahren zur Herstellung des Beutels**
Composite paper and bags for foodstuffs, in particular for prebaked bakery products, contain the composite paper, and a method for manufacturing such a bag
Papier composite ainsi que sac pour aliments, en particulier pour produits précuits, contenant la papier composite, et un procédé de fabrication du sac

(30) Priorität: 31.08.2006 DE 102006040921
(43) Veröffentlichungstag der Anmeldung: 05.03.2008
(73) Patentinhaber: Papier-Mettler - Inh. Michael Mettler, 54497 Morbach (DE)
(72) Erfinder: Budday, Christian, 54292 Trier (DE)
(74) Vertreter: Metten, Karl-Heinz

(56) Entgegenhaltungen:
- WO-A-00/53414
- DE-U- 1 985 257
- DE-U1- 20 108 128
- DE-U1-202004 010 214
- US-A1- 2005 031 887
- DATABASE WPI Week 199550 Derwent Publications Ltd., London, GB; AN 1995-388607 XP002459451 -& JP 07 264964 A (UNITIKA LTD) 17. Oktober 1995 (1995-10-17)
- DATABASE WPI Week 199003 Derwent Publications Ltd., London, GB; AN 1990-017298 XP002459452 -& JP 01 262747 A (DEPOSITION TECHNOLOGY INC) 19. Oktober 1989 (1989-10-19)
- DATABASE WPI Week 199423 Derwent Publications Ltd., London, GB; AN 1994-188502 XP002459453 -& JP 06 126917 A (TOPPAN PRINTING CO LTD) 10. Mai 1994 (1994-05-10)

## Beschreibung

Die vorliegende Erfindung betrifft einen Beutel für Lebensmittel, insbesondere für vorgebackene Backwaren, umfassend ein Verbundpapier.

Lebensmittel, wie Obst-, Gemüse-, Wurst- und Brotwaren, werden aus Hygiene- oder Frischhaltegründen regelmäßig in einer Verpackung an den Kunden übergeben. Besonders problematisch sind hierbei häufig feuchte Lebensmittel, wie Obststücke, und sehr fetthaltige Lebensmittel, beispielsweise Spritzgebäck, einzupacken. Mit herkömmlichen Verpackungsbehältnissen auf der Basis von Papier kann üblicherweise ein Durchnässen bzw. ein Durchdringen von Wasser oder Fett auf die Außenseite der Verpackung nicht verhindert werden, was stets als sehr nachteilig empfunden wird und unabhängig von der Qualität der Ware beim Kunden einen negativen Eindruck hinterläßt.

Besondere Anforderungen werden an solche Verpackungen gestellt, die erwärmte oder in dieser Verpackung zu erwärmende Lebensmittel aufzunehmen haben. Dieses Verpackungsmaterial hat nicht nur feuchte- und fettresistent zu sein, sondern ebenfalls eine hinreichende Temperaturstabilität aufzuweisen, und zwar ohne lebensmittelrechtlich beanstandet werden zu können. Besonders große Probleme gehen in diesem Zusammenhang im allgemeinen einher mit Verpackungen für vorgebackene Backware, die in der Verkaufsverpackung unmittelbar vor dem Verkauf fertig- bzw. aufzubacken ist. Derartige vorgebackene Backware wird aus Haltbarkeitsgründen unmittelbar nach dem Vorbackvorgang, d.h. noch warm in die Verkaufsverpackung eingeführt und in dieser bei etwa -20°C tiefgefroren und gelagert. Erst kurz vor dem Fertigbacken läßt man die vorgebackene Backware in der Verkaufsverpackung auftauen und setzt sie Backtemperaturen von 180° bis 200°C aus. Eine derartige Verpackung hat folglich nicht nur feuchtigkeitsresistent, z.B. gegen Kondenswasser und Eis, sowie fett- und hitzebeständig zu sein, sondern darf ebenfalls ein optisch ansprechendes Erscheinungsbild bis zur Übergabe an den Kunden und auch danach nicht verlieren. Denn nur so kann eine leichte und zuverlässige Handhabbarkeit beim Einsatz in Bäckereien gewährleistet werden.

Verpackungs- bzw. Beutelmaterialien, die den genannten Anforderungen in optimaler Weise gerecht werden, sind gegenwärtig am Markt noch nicht erhältlich.

In der DE 197 12 052 C2 wird eine Tüte zum Einhüllen von Brot vorgeschlagen, die aus einem Verbundmaterial aus einer Schicht aus zellstoffhaltigem Material und einer Kunststoffschicht aufgebaut ist. Dieses Verbundmaterial hat zwecks Erhalt einer ausreichend langen Haltbarkeit und Frische von Brot perforiert zu sein, wobei das Verhältnis von offener zu geschlossener Fläche des Verbundmaterials zwischen 1/50 und 1/250 zu liegen hat. Über die Perforation wird eine Atmungsaktivität erzielt, welche einen geregelten Austausch von Feuchte zwischen dem Beutelinneren und der Umgebung gewährleistet. Derartige Verpakkungen sind im herkömmlichen Gebrauch jedoch noch stets mit Nachteilen behaftet. Beispielsweise läßt das Erscheinungsbild der Verpackung bei längerer Lagerung der aufgebackenen Backware in dieser Verpackung noch stets zu wünschen übrig. Auch ist die Hitzebeständigkeit zuweilen ein Problem.

Diesem Problem kann auch nicht beigekommen werden durch eine in der DE 201 08 128 U1 offenbarte Weiterentwicklung der in der DE 197 12 052 C2 beschriebenen Lebensmittelverpackung, wonach der Beutel mit einem Sichtfenster zu versehen ist. Dieses Sichtfenster wird dadurch erhalten, daß man bereichsweise die zellstoffhaltige Materialschicht des Verbundsystems entfernt, so daß nur noch die transparente Kunststoffolie verbleibt.

Zudem ist festzustellen, daß Verpackungsbeutel, bestehend aus einer perforierten Kunststofffolie, wie in der WO 93/22207 A1 offenbart, vom Kunden in Bäckereien nicht angenommen werden. Nicht-perforierte Verpackungen für Lebensmittel sind z.B. in der DE 295 12 436 U1 und der DE 19 85 257 U1 beschrieben. Diese Offenbarungen gehen jedoch ebenfalls nicht über herkömmliche Verbundmaterialien aus Papier und einer Kunststoffolie hinaus.

In JP 07 264964 A wird ein Verbundpapier beschrieben, bei dem eine Polyesterfolie mit einer Dicke im Bereich von 9 bis 50 µm zum Einsatz kommt. Papier und Kunststofffolie sind mit Hilfe eines PE- oder PP-Harzes zu verkleben.

Aus der WO 00/53414 A1 geht ein Verfahren zur Herstellung eines Zellulose-basierten Verpackungsmaterials hervor, das mit Hilfe eines Dispersionsklebers auf der Basis eines Polyethylen-Imins mit einer Kunststofffolienbeschichtung versehen werden kann.

Die DE 20 2004 010 214 U1 betrifft einen Deckel zum Verschließen eines Nahrungsmittelbehälters, bei dem ein Verbundmaterial aus Papier zum Einsatz kommt, das beidseitig mit einer PET-Lage versehen ist.

In der JP 01 262747 A wird ein mehrlagiges Verbundsystem aus einer Papierlage, einer Haftlage, einer Polymerlage und einer Lage aus rostfreiem Stahl offenbart.

Demgemäß wäre es wünschenswert, auf Beutel für die Verpackung von Lebensmitteln sowie auf Wandungsmaterial für solche Beutel zurückgreifen zu können, die bzw. das nicht mit den Nachteilen des Stands der Technik behaftet ist.

Daher lag der vorliegenden Erfindung die Aufgabe zugrunde, Beutel für die Verpackung von Lebensmitteln, insbesondere von aufzubackendem Brot, zur Verfügung zu stellen, mit denen sich das Lebensmittel über einen längeren Zeitraum sowie über einen sehr großen Temperaturbereich lagern läßt, ohne seine Frische und Konsistenz einzubüßen. Insbesondere lag der vorliegenden Erfindung die Aufgabe zugrunde, eine Verpackung für aufzubackende Backwaren zu fmden, die bereits zu einem sehr frühen Zeitpunkt im Herstellungszyklus dieser Backware als Verpackung genutzt werden kann und die sowohl während als auch nach dem Aufbacken noch stets alle lebensmittelrechtlichen Vorgaben erfüllt, ein optisch ansprechendes Erscheinungsbild liefert und die aufgebackene Backware auch über einen längeren Zeitraum frisch und bei optimaler Feuchte hält.

Demgemäß wurde ein Beutel gemäß den Merkmalen des Patentanspruchs 1 gefunden. Die Verbundpapiere bzw. die das Verbundpapier bildende Komponenten sind vorzugsweise hitzebeständig bei üblichen Back- bzw. Aufbacktemperaturen. Bevorzugt ist eine Beständigkeit auch noch bei Temperaturen bis etwa 180°C, insbesondere bis etwa 200°C und besonders bevorzugt bis etwa 220°C, vorzugsweise für eine Dauer von mindestens 20 Minuten, insbesondere mindestens 45 Minuten.

In der Regel reicht es bereits aus, Verbundpapiere zweilagig auszuführen, und zwar mit einer ersten Papierlage und einer darauf kaschierten ersten Kunststoffolie. Zufriedenstellende Resultate stellen sich insbesondere dann ein, wenn für die Papierlage solche Papiere eingesetzt werden, die höchstens 10 Gew.-%, insbesondere im wesentlichen keine Anteile an recycliertem Papier enthalten. Ganz besonders bevorzugt sind Papiere aus langfaserigen Cellulosematerialien. Im allgemeinen können für die Verbundpapiere auch Papierlagen aus gebleichtem Papier eingesetzt werden. Die für das Verbundpapier verwendeten Papiere verfügen insbesondere auch über eine hohe Kompaktheit, was sich ebenfalls in den Zugfestigkeiten niederschlägt. Verbundpapiere zeichnen sich demnach bevorzugt dadurch aus, daß die Papierlage eine Zugfestigkeit im trockenen Zustand von mindestens 1,5, insbesondere mindestens 2,5, in Querrichtung (CD) und/oder von mindestens 4,0, insbesondere mindestens 5,0, in Maschinenrichtung (MD), gemessen in DaN/15 min nach ISO 1924-2, aufweist. Überdies sind solche Verbundpapiere besonders bevorzugt, bei denen die Papierlage eine Zugfestigkeit im feuchten Zustand von mindestens 0,4, insbesondere 0,5, in Querrichtung (CD) und/oder mindestens 1,0, insbesondere mindestens 1,2, in Maschinenrichtung (MD), gemessen in DaN/15 5 min nach NFQ 03-056, aufweist.

Zweckmäßigerweise sind die Papierlagen des Verbundpapiers wasserabweisend bzw. naßfest und/oder fettabweisend bzw. fettdicht ausgestattet. Solche Papiere können beispielsweise über mindestens ein partial- oder perfluoriertes Polymer und/oder eine Verbindung mit mindestens einer partial- und/oder perfluorierten geradlinigen oder verzweigten Kohlenstoffkette, beispielsweise mit 2 bis 50 Kohlenstoffatomen, verfügen. Geeignetes partial oder perfluorierte Verbindungen umfassen Ammonium di-[2-(N-ethyl-heptadecafluorosulfonamido)ethyl]phosphat, Poly(2-(N-methyl-heptadecafluorosulfonamido)-ethylacrylate)-co-(2,3-epoxypropylacrylat)-co-(2-ethoxyethylacrylat)-co-(2-(2-methylpropenyloyloxy)ethyl-trimethylammoniumchlorid und Poly(2-(N-methyl-heptadecafluorosulfonamido)ethylacrylat)-co-(2,3-epoxypropylacrylat)-co-(2-ethoxyethylacrylat)-co-(2-(2-methylpropenyloyloxy)ethyl-trimethylammoniumchlorid. Derartige Verbindungen sind beispielsweise unter den Markenbezeichnungen Scotchban FX 845 (3M) und Foraperle 321 (Atochem) kommerziell erhältlich.

Alternativ oder zusätzlich können solche Papiere auch mindestens einen, insbesondere hochschmelzenden, Wachs enthalten. Solche geeigneten Wachse sind dem Fachmann bekannt.

Darüber hinaus kann das Papier mit einem geeigneten Latex versetzt oder behandelt sein. Geeignete Latizes umfassen Styrol/Acryl-, oder Acrylnitril/Styrol/Acryl-, Ethylenvinylalkohol-, Ethylenvinylchlorid-, Ethylvinylacetat-, Vinylacetat acryl- und Styrol/Butadien-Copolymere. Zudem kommen als Latex Polyvenylalkoholpolymere und Polyacrylsäure in Betracht.

Um in besonderer Weise wasserabweisend bzw. naßfest zu sein, kann auf Papiermaterialien zurückgegriffen werden, die mindestens ein mit Epichlorhydrin modifiziertes Polyamid und/oder Glyoxal aufweisen. Gemäß einer weiteren Ausführungsform sind besonders geeignete wasser- und fettresistente Papiere mit einer Mischung enthaltend Glyoxal, mindestens ein dimeres Alkylteten und mindestens ein fluoriertes Salz, insbesondere ausgewählt unter den Salzen von Aminoalkoholen, insbesondere Ethanolamin, mit Perfluoralkylphosphaten, insbesondere Perfluorethylphosphaten, ausgestattet. Hierbei ist von besonderem Vorteil, wenn das Papier mindestens 0,03 Gew.-% Glyoxal, mindestens 0,01 Gew.-% des dimeren Alkylketens und mindestens 0,02 Gew.-% des fluorierten Salzes enthält. Als dimeres Alkylketen kommt beispielsweise das unter der Bezeichnungen Aquapel 360 XV von der Firma Hercules vertriebene Produkt in Betracht. Bei den fluorierten Salzen wird bevorzugt auf solche von Diethanolamine mit Mono- oder Bis (1 H, 2 H, 2 H-Perfluoralkylethyl)-Phosphaten mit C₈₋₁₈-Alkylgruppen zurückgegriffen.

Ein Papier bzw. eine Papierlage des Verbundpapiers enthält im Sinne der vorliegenden Erfindung eine der vorangehend genannten Substanzen oder ist mit dieser ausgestattet, wenn diese Substanzen beispielsweise bereits bei der Herstellung des Papiermaterials mit verarbeitet werden und/oder wenn diese Substanzen auf einer Zwischenstufe bei der Herstellung des Papiermaterials aufgetragen oder eingearbeitet werden und/oder wenn die Papierlagen mit diesen Substanzen durchtränkt oder imprägniert werden. Als besonders vorteilhaft hat sich erwiesen, besondere Sorgfalt auch auf die Behandlung auch der Kanten bzw. Ränder der Papierlage zu verwenden.

Selbstverständlich kann die erste Papierlage des Verbundpapiers nicht nur einlagig, sondern auch mehrlagig, beispielsweise zwei- oder dreilagig, ausgeführt sein. Bei einer zweilagigen Papierlage können die beiden Einzellagen beispielsweise mit Hilfe eines geeigneten Klebers miteinander verbunden werden. Während z.B. die erste Schicht der Papierlage durch Behandlung mit Glyoxal oder mit mit Epychlorhydrin modifiziertem Polyamid feuchteresistent gemacht wird, kann die zweite Schicht der Papierlage durch Behandlung mit Wachsen und/oder Fluorpolymeren, wie vorangehend beschrieben, insbesondere fettresistent gemacht werden. Selbstverständlich sind auch solche mehrlagigen Systeme von dem Verbundpapier mitumfaßt.

Die für das Verbundpapier zum Einsatz kommende Papierlage ist vorzugsweise bedruckbar, insbesondere beidseitig bedruckbar.

Geeignete Verbundpapiere zeichnen sich in einer bevorzugten Ausführungsform ferner dadurch aus, daß das Papier ein Flächengewicht im Bereich von 20 bis 570 g/m², insbesondere im Bereich von 30 bis 150 g/m² und besonders bevorzugt im Bereich von 30 bis 90 g/m² aufweist.

Für die erste Kunststoffolie wird vorzugsweise eine transparente oder transluzente Kunststofffolienbahn verwendet.

Bevorzugt weist die erste Kunststoffolie ein Flächengewicht im Bereich von 10 bis 50 g/m², insbesondere im Bereich von 20 bis 40 g/m², auf.

Die erste Kunststoffolie verfügt vorzugsweise über eine durchschnittliche Dicke im Bereich von 5 bis 50 µm, insbesondere im Bereich von 10 bis 30 µm, beispielsweise 15 µm.

Geeignete erste Kunststoffolien zeichnen sich insbesondere dadurch aus, daß die erste Kunststoffolie eine ein- oder mehrlagige, mono- oder biaxial orientierte Kunststoffolie darstellt.

Dabei kann vorgesehen sein, daß die erste Kunststoffolie eine zwei- oder dreilagige koextrudierte Kunststoffolie darstellt.

Besonders bevorzugt ist dabei, daß die erste Kunststoffolie eine Polyesterfolie, insbesondere eine PET-Folie, oder eine Polypropylen-Folie darstellt. Neben Polyethylenterephthalat-Folien kommen als geeignete Polyesterfolien auch solche aus Polybutylenterephthalat und solche aus Polyalkylennaphthalaten in Betracht.

Gemäß einer bevorzugten Ausführungsform kann ein Verbundpapier vorgesehen sein, bei dem die erste Kunststoffolie eine PET-, PBT- oder Polyalkylennaphthalat-Folie oder eine Polypropylenfolie darstellt, die zumindest bereichsweise mit einem ersten Kleber, insbesondere einem PUR-Kleber, auf der Vorder- und/oder der Rückseite der Papierlage aufkaschiert ist.

Unter den Polypropylenfolien wird bevorzugt auf orientiertes Polypropylen (oPP) sowie auf cast-Polypropylen (cPP) zurückgegriffen.

Unter den Kunststoffolien sind Polyesterfolien, insbesondere PET-Folien, wegen ihrer ausgeprägten Temperaturbeständigkeit bevorzugt.

Ist die erste Kunststoffolie eine Mehrschichtfolie, beispielsweise eine solche, die neben einer Basis- bzw. Trägerschicht ein- oder beidseitig mit einer siegelbaren Schicht ausgestattet ist, wird diese vorzugsweise mittels Coextrusion erhalten.

Besonders zufriedenstellende Resultate stellen sich mit solchen Verbundpapieren ein, bei denen die erste Kunststoffolie eine siegelbare, biaxial orientierte, durch Coextrusion hergestellte mehrschichtige Polyesterfolie mit einer Basisschicht, enthaltend Polyethylenterephthalat-Homopolymere oder -Copolymere, und einer siegelfähigen Deckschicht, enthaltend Copolyester mit Ethylen-2,6-naphthalat und/oder Ethylenterephthalat-Einheiten, umfaßt.

Bei besonders geeigneten Verbundpapieren ist ferner vorgesehen, daß die erste Kunststoffolie bibenzolmodifzierte kristallisierbare Polyalkylenterephthalate und/oder Polyalkylennaphthalate umfaßt. Derartige erste Kunststoffschichten verfügen bevorzugt über eine Deckschicht, enthaltend unmodifizierte Polyalkylenterephthalate, bibenzolmodifizierte und/oder unmodifzierte Polyalkylennapththalate oder bibenzolmodifizierte und/oder unmodifierzte Polyalkylenterephthalat-polyalkylennaphthalat-Copolymere.

Die vorangehend genannten bibenzolmodifizierten Polyester bilden in einer alternativen Ausführungsform eine Kunststoffolie aus amorphem Material aus, welche vorzugsweise über einen Kristallinitätsgrad kleiner 3% bevorzugt, kleiner 1% verfügt.

Eine weitere alternative Ausgestaltung eines Verbundpapiers sieht vor, daß der bibenzolmodifizierte Polyester einen Diethylenglykolgehalt größer 1,0 Gew.-% und/oder einen Polyethylenglykolgehalt größer 1,0 Gew.-% und/oder einen Isophthalsäuregehalt von 3 bis 10 Gew.-% aufweist. Dabei kommen insbesondere bibenzolmodifizierte Polyester mit einem Diethylenglycolgehalt größer 1,0 Gew.-% und/oder einem Polyethylenglycolgehalt größer 1,0 Gew.-% und/oder einem Isophthalsäuregehalt von 3 bis 10 Gew.-% zum Einsatz.

Verbundpapiere liegen bevorzugt in perforierter Form vor. Das Perforationsmuster kann regelmäßig, beispielsweise in Form äquidistant beabstandeter Löcher, oder unregelmäßig sein. Zur Erzielung eines optimalen Feuchteausgleichs wird das Verhältnis von offener Fläche zur Gesamtfläche üblicherweise auf Werte im Bereich von 1/25 bis 1/100, insbesondere auf Werte im Bereich 1/50 bis 1/250, eingestellt. Hierbei ist es grundsätzlich unerheblich, ob die die offene Fläche erzeugenden Perforationen ausschließlich im Verbundpapier oder in einer Fläche der Papierlage vorliegen, die nicht mit der ersten Kunststoffolie kaschiert ist, oder in einer Fläche der ersten Kunststoffolie, die nicht mit der ersten Papierlage kaschiert ist, oder in der zweiten Kunststoffolie.

Zur Erzielung eines zufriedenstellenden Feuchteausgleichs reichen in der Regel Perforationslöcher mit einem mittleren Durchmesser im Bereich von 0,2 bis 2,0 mm aus.

Die erste Kunststoffolie wie auch das Papier werden in ihrem äußeren Erscheinungsbild und auch in ihrer inneren Struktur durch Temperaturen im Bereich von -30° bis 200°C weder funktional noch optisch beeinträchtigt.

In einer besonders bevorzugten Ausführungsform sind die Papierlage und die Lage der ersten Kunststoffolie lösbar miteinander verbunden, woraus Vorteile beim Recyceln resultieren.

Das Aufkaschieren der ersten Kunststoffolie auf die Papierlage erfolgt vorzugsweise mit einem ersten Kleber, insbesondere auf PUR-Basis. Geeignete PUR-Systeme können z.B. auf aliphatischen oder auf aromatischen Isocyanaten basieren. Dabei reicht es für eine hinreichende Kaschierung im allgemeinen bereits aus, wenn der PUR-Klebstoff mit der Feuchtigkeit aus der Papierlage reagiert. Hierdurch wird eine besonders intensive Anbindung erzielt. Ein geeigneter PUR-Kleber ist unter der Markenbezeichnung Liofol UR 7515 von der Firma Henkel KGaA erhältlich.

Bei dem erfindungsgemäßen Beutel sind die zweite Kunststoffolie und das Verbundpapier im Bereich überlappender Auflageflächen zumindest bereichsweise mit einem zweiten PUR-Hotmeltkleber verbunden.

Hierbei ist vorgesehen, daß die zweite Kunststoffolie zumindest abschnittsweise über den zweiten PUR-Hotmeltkleber mit der ersten Kunststoffolie des Verbundpapiers verbunden ist.

Besonders bevorzugt kommt als zweiter PUR-Hotmeltkleber ein solcher auf der Basis aliphatischer Isocyanate zum Einsatz. Bei Verwendung aliphatischer Isocyanate anstatt aromatischer Isocyanate kann das Phänomen des Vergilbens unterdrückt werden. Wird ein Kleber basierend auf aromatischen Isocyanaten hinreichend dünn aufgetragen, treten Vergilbungsphänomene in der Regel nicht in Erscheinung.

Ein besonders geeigneter PUR-Hotmeltkleber auf der Basis aliphatischer Isocyanate stellt das kommerziell erhältliche Produkt Technopur CB 2005-21 der Firma Henkel KGaA dar.

Die zweite Kunststoffolie verfügt vorzugsweise über eine durchschnittliche Dicke im Bereich von 5 bis 250 µm, insbesondere im Bereich von 10 bis 50 µm, beispielsweise 20 µm.

Vorzugsweise bildet die zweite Kunststoffolie im wesentlichen die gesamte Vorderwand aus. Insbesondere bei Verwendung von Seitenfaltenbeuteln hat es sich als zweckmäßig erwiesen, daß die zweite Kunststoffolie mit sich gegenüberliegenden Seitenwänden des Beutels verbunden ist.

Verfahrenstechnisch von Vorteil ist es, wenn die Vorderwand und die Rückwand oder die Rückwand und die Seitenwände im Bodenbereich mit einem, insbesondere pastösen, Dispersionsleim verklebt sind. Ein besonders bevorzugter Dispersionsleim ist das kommerziell erhältliche Produkt Adhesin J 1626 HV der Firma Henkel KGaA.

Bei erfindungsgemäßen Beuteln kann in einer Ausführungsform die Rückwand aus zwei entlang einer Längsnaht miteinander verbundenen longitudinalen ersten und zweiten Abschnitten gebildet sein. Dabei kann vorgesehen sein, daß die die erste Kunststoffolie aufweisende Seite des ersten Abschnitts des Verbundpapiers mit der das Papier aufweisenden Seite des zweiten Abschnitts des Verbundpapiers mit dem zweiten PUR-Hotmeltkleber verbunden ist.

Ist die Rückwand als solche nicht einstückig ausgebildet, liegen vorzugsweise der erste Abschnitt der Rückwand und die erste Seitenwand und/oder der zweite Abschnitt der Rückwand und die zweite Seitenwand jeweils einstückig vor.

Soweit die zweite Kunststoffolie mit insbesondere der ersten Kunststoffolie des Verbundpapiers zu verbinden ist, kann dieses neben dem bereits geschilderten Verkleben auch durch Versiegeln oder Verschweißen geschehen. Dieses gilt in gleicher Weise für die gegenseitige Anbringung zweier Verbundpapierbahnen, soweit erste Kunststoffolien gegeneinander zur Anlage gelangen. In einer zweckmäßigen Ausgestaltung werden die zweite Kunststoffolie und die erste Kunststoffolie des Verbundpapiers, wie vorangehend beschrieben, miteinander verklebt, insbesondere unter Einsatz eines zweiten PUR-Hotmeltklebers.

Das überlappende Verbundpapier kann in einer bevorzugten Ausführungsform ineinander eingeschlagen sein. Hierbei können sodann die aufeinander zur Anlage kommenden Außenflächen des Verbundpapiers, z.B. unter Ausbildung eines geschlossenen Bodens, miteinander verklebt werden. Selbstverständlich kann auch die zweite Kunststoffolie mit der Außenfläche des Verbundpapiers haftend verbunden werden, beispielsweise mittels Verschweißens oder Versiegelns.

In einer besonders bevorzugten Ausführungsform sind das Verbundpapier und/oder die zweite Kunststoffolie perforiert.

Dabei kann vorgesehen sein, daß das Verhältnis von offener Fläche zur Gesamtfläche der den Beutel ausmachenden Wandungen im Bereich von 1/25 bis 1/500, insbesondere von 1/50 bis 1/250, liegt.

Die Perforationslöcher weisen vorzugsweise einen mittleren Durchmesser von 0,2 bis 2,0 mm, vorzugsweise von 0,4 bis 1,5 mm, auf. Derartige Perforationslöcher sind im Durchschnitt von unmittelbar benachbarten Perforationslöchern in dem Verbundpapiermaterial vorzugsweise etwa 0,5 bis 2 cm beabstandet.

Erfindungsgemäße Beutel können nach einem Verfahren erhalten werden umfassend die Schritte:
a) Zurverfügungsstellung zweier Bahnen aus Verbundpapier, wie vorangehend beschrieben,
b) zumindest bereichsweise im wesentlichen parallel beabstandete Ausrichtung der ersten und der zweiten Verbundpapierbahnen,
c) Auflegen einer Bahn aus der zweiten Kunststoffolie in dem Bereich zwischen den beabstandeten ersten und zweiten Verbundpapierbahnen, so daß die gegenüberliegenden Längsränder der Kunststoffolienbahn zumindest abschnittsweise mit den ersten Seitenrandbereichen der sich gegenüberliegenden ersten Längsränder der ersten und zweiten Verbundpapierbahn überlappen,
d) zumindest bereichsweises Verkleben der sich überlappenden Bereiche von erstem Seitenrandbereich der erste Verbundpapierbahn und Kunststoffolienbahn sowie von erstem Seitenrandbereich der zweiten Verbundpapierbahn und Kunststoffolienbahn, insbesondere mit einem PUR-Hotmeltkleber,
e) gegebenenfalls zumindest abschnittsweises gegenseitiges Überlappen der zweiten Seitenwandbereiche der zweiten Längsränder der ersten und zweiten Verbundpapierbahn,
f) zumindest bereichsweises Verkleben der sich zumindest abschnittsweise überlappenden zweiten Seitenrandbereiche von erster und zweiter Verbundpapierbahn, insbesondere mit einem PUR-Hotmeltkleber, unter Ausbildung eines Schlauchs,
g) Separierung der Schlauchbahn in Beutelsegmente,
h) Ausbildung des Beutelbodens durch Verkleben von von sich überlappenden Abschnitten von Vorderwand und Rückwand und/oder von Rückwand und erster und/oder zweiter Seitenwand.

Dabei kann vorgesehen sein, daß zwischen den Schritten b) und c) die das Papier aufweisende Seite des Verbundpapiers bedruckt wird.

Von Vorteil ist ferner, wenn das Verbundpapier und/oder die zweite Kunststoffolie zumindest bereichsweise perforiert werden.

Eine besonders bevorzugte Atmungsaktivität stellt sich dann ein, wenn das Verbundpapier von derjenigen Seite, die das Papier aufweist, eingestochen wird.

Hierbei können ebenfalls die Einstiche von der die erste Kunststoffolie aufweisenden Seite des Verbundpapiers geglättet werden.

Der vorliegenden Erfindung lag die überraschende Erkenntnis zugrunde, daß sich eine für Lebensmittel geeignete wasser-, fett- und temperaturbeständige Verpackung erhalten läßt, wenn diese mit den Merkmalen des Patentanspruchs 1 ausgestattet ist. Insbesondere in Kombination mit Perforationsöffnungen in den Beutelwandungen erhält man ein Verpackungsprodukt, das nicht nur zum Aufbacken, sondern sogar zum Backen von Teigware geeignet ist. Demgemäß lassen sich vorgebackene Backwaren wie auch Teige von Backwaren in den erfindungsgemäßen Verpackungen bis zum gewünschten Garendzustand bringen, ohne daß diese Verpackung irgendeine optische Beeinträchtigung erfährt oder der Backvorgang oder die Backware beeinträchtigt werden. Gleichwohl kann stets der gewünschte Backerfolg gewährleistet werden, und die erhaltene Backware kann in der Verpackung, in der sie gebacken worden ist, in geeigneten Auslagen zum Verkauf angeboten werden. Ein weiterer Vorteil der erfindungsgemäßen Verpackungen besteht bei der Handhabung darin, daß das Verpackungsmaterial wesentlich schneller abkühlt als die aufgewärmte Backware und somit die Gefahr von Verbrennung merklich verringert wird.

Weiter Vorteile, Merkmale und Anwendungsmöglichkeiten der vorliegenden Erfindung ergeben sich aus der folgenden Beschreibung eines bevorzugten Ausführungsbeispiels in Verbindung mit den anliegenden Zeichnungen. In diesen Zeichnungen zeigen
- Figur 1: eine schematische Darstellung einer Vorderseite eines erfindungsgemäßen Beutels, und
- Figur 2: eine schematische Rückseitenansicht des erfindungsgemäßen Beutels gemäß Figur 1 und
- Figur 3 a) - n): schematische Schnittanschichten der erfindungsgemäßen Sichtfensterbeutel.

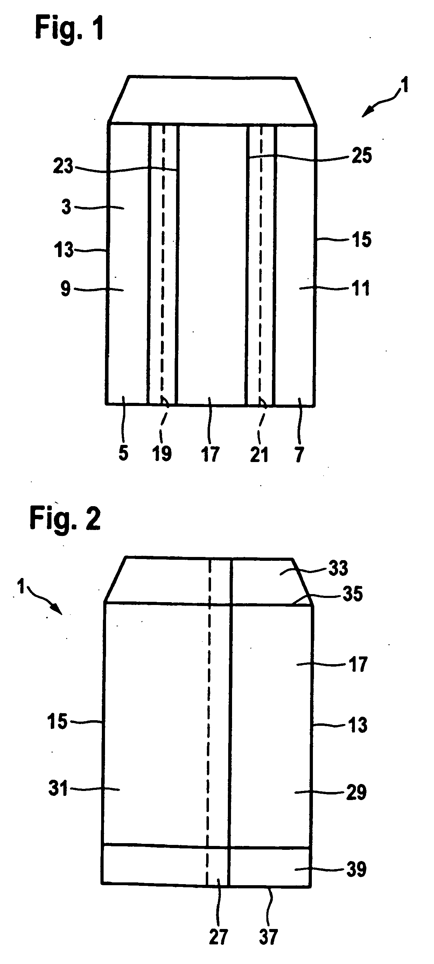

In Figur 1 ist eine Vorderseitenansicht eines erfindungsgemäßen Beutels 1 zu entnehmen. Bei dem Beutel 1 handelt es sich um einen Seitenfaltenbeutel, der im eingefalteten Zustand gezeigt ist. Die komplette Vorderseite dieses Beutels ist mit einer transparenten perforierten zweiten Kunststoffolie 3 ausgestattet. Die ersten und zweiten Seitenwände 5 und 7 liegen in gefaltetem Zustand vor. Das heißt, in der Figur 1 sind die Außenflächen der Seitenwände 5 und 7 in den außenliegenden Abschnitten 9 und 11 zu sehen. An den abgebildeten Außenkanten 13 und 15 gehen die Seitenwände 5 und 7 in die Rückwand 17 über. In den Abschnitten 19 und 21 ist jeweils die Innenfläche der Seitenwandungen dem Betrachter zugewandt. Folglich sind die Seitenwände 5 und 7 an den innenliegenden Kanten 23 und 25 umgeschlagen, so daß in diesen Bereichen 19 und 21 jeweils die Außenflächen der Seitenwandung aufeinander zur Anlage gelangen. Die Seitenwände 5 und 7 sowie die Rückseite 17 sind aus Verbundpapier gefertigt, wobei die aufkaschierte erste Kunststoffolie des Verbundpapiers jeweils auf der Innenfläche von Rückwand und Seitenwänden vorliegt. Demgemäß ist diese aufkaschierte Kunststoffolie in den Abschnitten 19 und 21 dem Betrachter zugewandt. Auf diesen Abschnitten 19 und 21 ist die Kunststoffolienvorderwand 3 mit den Seitenwandungen 5 und 7 über eine im wesentlichen durchgehende Klebelinie (durch gestrichelte Linien angedeutet) verbunden, und zwar in der Weise, daß die zweite Kunststoffolie sich jeweils zunächst bis zu einer Faltungslinie erstreckt, die im wesentlichen mit den Kantenverläufen 13 bzw. 15 übereinstimmt. Je nach Betrachtungsweise kann derjenige Abschnitt der zweiten Kunststoffolie, der sich von der Anbindung auf den Abschnitten 19 und 21 mit den jeweiligen Seitenwänden bis zu den Außenkanten 13 und 15 des Beutels erstreckt als Bestandteil der Seitenwandung oder als Bestandteil der Vorderwand betrachtet werden. Zwischen den innenliegenden Kanten 23 und 25 schaut man durch die transparente zweite Kunststoffolie der Vorderwand 3 auf die Innenfläche der Rückwand 17. In einer bevorzugten Ausgestaltung liegen die Perforationen (nicht abgebildet) in der ersten Kunststoffolie nur in dem Bereich vor, der sich zwischen den Außenkanten 13 und 15 erstreckt.

Figur 2 zeigt eine Ansicht der Außenfläche der Rückseite 17 des erfindungsgemäßen Beutels 1. Die Rückseite 17 besteht im wesentlichen aus dem erfindungsgemäßen Verbundmaterial und verfügt über eine Klebeverbindung in einem Bereich 27, in dem sich die die Rückseite bildenden Längshälften 29 und 31 überlappen. Demgemäß liegen die Seitenwandung 5 und der längliche Rückwandabschnitt 29 sowie die Seitenwandung 7 und der längliche Rückwandabschnitt 31 jeweils einstückig vor und werden aus separaten Verbundpapierbahnen gefertigt. Die Rückwand 17 verfügt über eine Verschlußlasche 33, die entlang einer Pfalz 35 umgeklappt werden kann. Der Boden 37 des Beutels 1 wird dadurch verschlossen, daß man wie vorangehend beschrieben aufeinander geklappt vorliegenden Seitenwand- und Vorderwand-Materialien auf die Rückseite umklappt und den überlappenden Bereich 39 mittels Verklebens verschließt.

Der erfindungsgemäße Seitenfaltenbeutel 1 verfügt über ein relativ großes Aufnahmevolumen, hält gleichwohl die darin verpackte Backware frisch und verliert auch nicht bei Behandlung bei Temperaturen von 200°C über einen längeren Zeitraum sein ansprechendes äußeres Erscheinungsbild. Weder die Kunststoffolie der Vorderseite noch das die Seitenwände und die Rückwand bildende Verbundpapiermaterial werden verfärbt oder anderweitig durch Feuchtigkeit- oder Fettrückstände in ihrer technischen Funktion oder ihrem Erscheinungsbild beeinträchtigt.

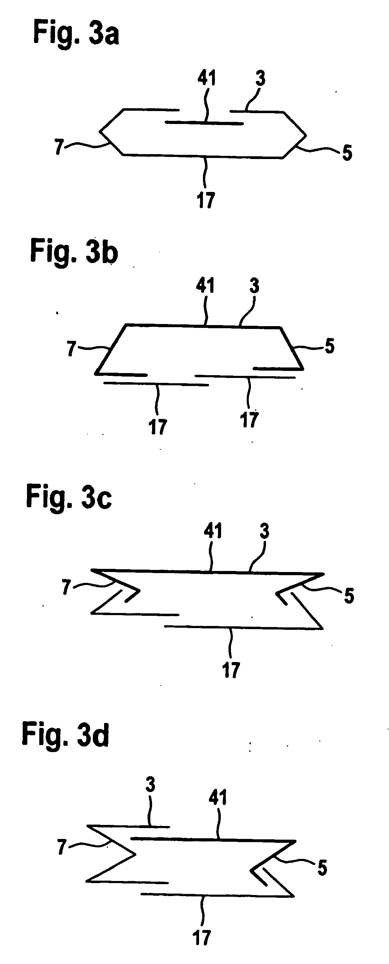

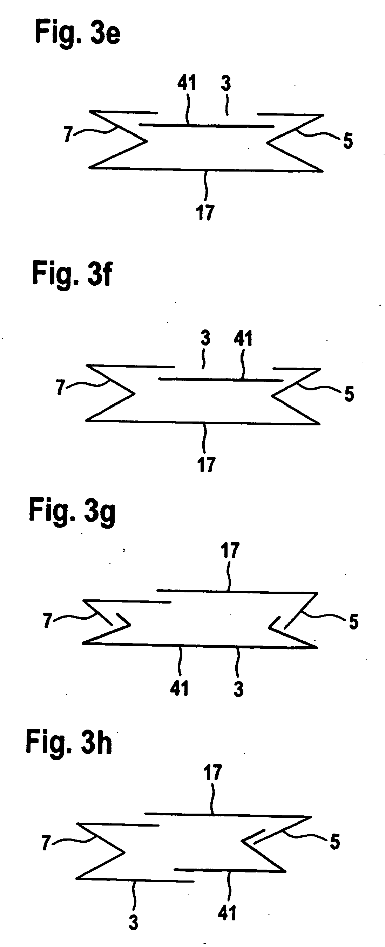

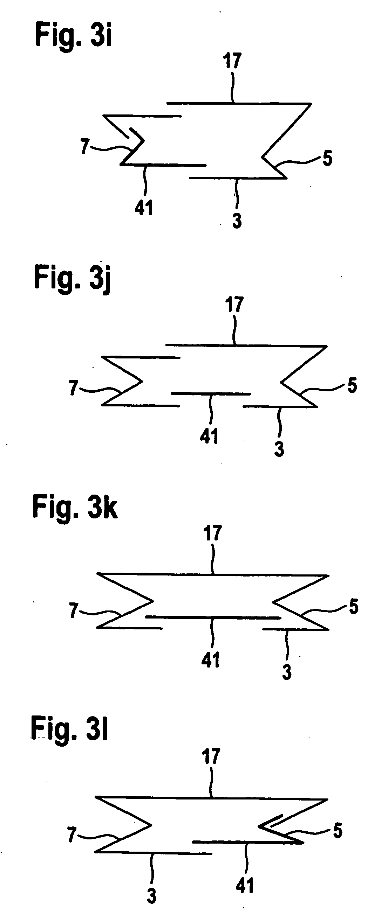

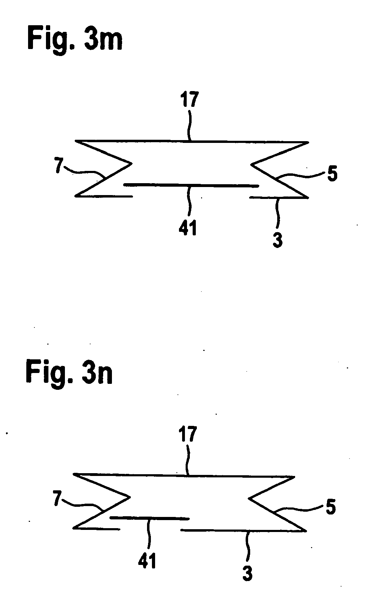

Zur Veranschaulichung der Bandbreite, in der die erfindungsgemäßen Beutel in Form von Sichtfensterbeuteln eingesetzt werden können, sind in den Figuren 3 a) bis n) beispielhaft verschiedener Ausführungsformen in Schnittansicht wiedergegeben. Die darin verwendeten Bezugszeichen für die Vorderseite, die Rückseite bzw. -wand, die erste und zweite Seitenwand stimmen der Einfachheit halber mit den vorangehend für die Ausführungsform der Figuren 1 und 2 verwendeten Bezugszeichen überein. Das Sichtfenster ist mit dem Bezugszeichen 41 gekennzeichnet. Die Sichtfensterbeutel können beispielsweise 2-bahnig sein (Fig. 3a), e), f), k),1), m) und n)) oder aber 3-bahnig (s.a. Fig. 3b), c), d), g), h), i) und j)). Bei den Vorder-, Rück- und Seitenwänden wird auf das Verbundpapier zurückgegriffen. Für das Sichtfenster 41 kommt vorzugsweise eine zweite Kunststoffolie auf PET-Basis zum Einsatz. Die zweite Kunststoffolie in Form des Sichtfensters ist mit der aufkaschierten ersten Kunststoffolie des Verbundpapiers in den jeweils überlappenden Bereich in 43 in einer bevorzugten Ausgestaltung mit einem zweiten PUR-Hotmeltkleber verbunden.

Die in der vorstehenden Beschreibung, in den Ansprüchen sowie in den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Beutel
- 3: Vorderseite
- 5: erste Seitenwand
- 7: zweite Seitenwand
- 9: außenliegender Abschnitt der ersten Seitenwand
- 11: außenliegender Abschnitt der zweiten Seitenwand
- 13: Außenkante
- 15: Außenkante
- 17: Rückwand
- 19: umgeklappter innenliegender Abschnitt der Seitenwand
- 25: umgeklappter innenliegender Abschnitt der Seitenwand
- 23: innenliegende Kante
- 25: innenliegende Kante
- 27: Klebeverbindung im Bereich der Rückwand
- 29: erste Längshälfte der Rückwand
- 31: zweite Längshälfte der Rückwand
- 33: Verschlußlasche
- 35: Pfalz
- 37: Beutelboden
- 39: überlappender Bereich am Beutelboden
- 41: Sichtfenster
- 43: überlappende Bereiche von erster und zweiter Kunststoffolie

## Patentansprüche

1. Beutel zur Aufnahme von Lebensmitteln, insbesondere von vorgebackener Backware, mit einem im wesentlichen geschlossenen Bodenende und einem gegenüberliegenden Öffnungsende, umfassend eine Vorderwand und eine Rückwand, die im Bereich ihrer Seitenränder und Bodenränder zumindest abschnittsweise direkt oder über Seitenwände miteinander verbunden sind
wobei die Rückwand zumindest bereichsweise Verbundpapier aufweist, umfassend mindestens eine erste Lage eines nicht silikonisierten Papiers mit einem Flächengewicht im Bereich von 20 bis 150 g/m² und mindestens eine zweite Lage einer transparenten oder transluzenten als PET-Folie ausgebildeten ersten Kunststofffolie mit einer durchschnittlichen Dicke im Bereich von 5 bis 50 µm, die zumindest bereichsweise mit einem PUR-Kleber als erstem Kleber auf der Rückseite der Papierlage aufkaschiert ist, **dadurch gekennzeichnet,**
**dass**
die Vorderwand und die Rückwand und/oder die Rückwand und die Seitenwände im Bodenbereich mit einem, insbesondere pastösen, Dispersionsleim verklebt sind,
**dass** die erste Kunststofffolie eine ein- oder mehrlagige, mono- oder biaxial orientierte Kunststofffolie darstellt,
**dass** die die erste Kunststofffolie aufweisende Seite des Verbundpapiers dem Beutelinneren zugewandt ist,
**dass** die Vorderwand Verbundpapier, umfassend mindestens eine erste Lage eines nicht silikonisierten Papiers mit einem Flächengewicht im Bereich von 20 bis 150 g/m² und mindestens eine zweite Lage einer transparenten oder transluzenten als PET-Folie ausgebildeten ersten Kunststofffolie mit einer durchschnittlichen Dicke im Bereich von 5 bis 50 µm, die zumindest bereichsweise mit einem PUR-Kleber als erstem Kleber auf der Rückseite der Papierlage aufkaschiert ist, und bereichsweise eine transparente oder transluzente zweite Kunststofffolie aufweist oder
**dass** die transparente oder transluzente zweite Kunststofffolie im Wesentlichen die gesamte Vorderwand bildet,
**dass** die zweite Kunststofffolie und das Verbundpapier im Bereich überlappender Auflageflächen zumindest bereichsweise mit einem zweiten PUR-Hotmeltkleber verbunden sind und dass die zweite Kunststofffolie zumindest abschnittsweise über den PUR-Hotmeltkleber mit der ersten Kunststofffolie des Verbundpapiers verbunden ist.

2. Beutel nach Anspruch 1, **dadurch gekennzeichnet, dass**
die zweite Kunststofffolie mit sich gegenüberliegenden Seitenwänden des Beutels verbunden ist.

3. Beutel nach einem der vorausgehenden Ansprüche, **dadurch gekennzeichnet, dass**
die die erste Kunststofffolie aufweisende Seite eines ersten Abschnitts des Verbundpapiers mit der das Papier aufweisenden Seite eines zweiten Abschnitts des Verbundpapiers mit einem zweiten PUR-Kleber, insbesondere PUR-Hotmeltkleber, verbunden ist.

4. Beutel nach einem der vorausgehenden Ansprüche, **dadurch gekennzeichnet, dass**
der zweite PUR-Hotmeltkleber auf dem Einsatz von aromatischen oder aliphatischen Isocyanaten basiert.

5. Beutel nach einem der vorausgehenden Ansprüche, **dadurch gekennzeichnet, dass**
das Verbundpapier und/oder die zweite Kunststofffolie perforiert sind.

6. Beutel nach einem der vorausgehenden Ansprüche, **dadurch gekennzeichnet, dass**
das Papier höchstens 10 Gew.-%, insbesondere im wesentlichen keine Anteile, an recycliertem Papier enthält.

7. Beutel nach einem der vorangehenden Ansprüche, **dadurch gekennzeichnet, dass**
das Papier fettabweisend ausgestattet ist.

8. Beutel nach einem der vorangehenden Ansprüche, **dadurch gekennzeichnet, dass**
das Papier mindestens ein mit Epichlorhydrin modifiziertes Polyamid und/oder Glyoxal enthält.

9. Beutel nach einem der vorangehenden Ansprüche, **dadurch gekennzeichnet, dass**
die erste Kunststofffolie bibenzolmodifzierte kristallisierbare Polyalkylenterephthalate und/oder Polyalkylennaphthalate umfaßt.

10. Beutel nach Anspruch 9, **dadurch gekennzeichnet, dass**
die erste Kunststoffschicht ferner eine Deckschicht, enthaltend unmodifizierte Polyalkylenterephthalate, bibenzolmodifizierte und/oder unmodifzierte Polyalkylennapththalate oder bibenzolmodifizierte und/oder unmodifierzte Polyalkylenterephthalat-polyalkylennaphthalat-Copolymer, umfaßt.

11. Beutel nach Anspruch 10, **dadurch gekennzeichnet, dass**
der Kristallinitätsgrad der Folie kleiner 3%, bevorzugt kleiner 1 %, ist.

## Claims

1. A bag for containing foodstuffs, in particular pre-baked bakery products, with a substantially closed bottom end and an opposing opening end,
comprising a front wall and a rear wall which are attached to each other, at least in sections, directly or through side walls, in the region of their side edges and bottom edges, wherein the rear wall, at least in sections, is formed from composite paper,
comprising at least a first layer of a non-siliconized paper with a grammage ranging from 20 to 150 g/m² and at least a second layer of a transparent or translucent first plastic film formed as a PET film with an average thickness ranging from 5 to 50 µm, said first plastic film being laminated onto the reverse side of the paper layer, at least in sections, using a PU adhesive as a first adhesive,
**characterized in that**
the front wall and the rear wall and/or the rear wall and the side walls are conglutinated in the bottom region using a, in particular pasty, dispersion adhesive,
the first plastic film is a single- or multi-layer, monoaxially or biaxially oriented plastic film,
the side of the composite paper with the first plastic film faces the interior of the bag,
the front wall contains composite paper, comprising at least a first layer of a non-siliconized paper with a grammage ranging from 20 to 150 g/m² and at least a second layer of a transparent or translucent first plastic film formed as a PET film with an average thickness ranging from 5 to 50 µm, said first plastic film being laminated onto the reverse side of the paper layer, at least in sections, using a PU adhesive as a first adhesive, and a transparent or translucent second plastic film, at least in sections, or
the transparent or translucent second plastic film substantially forms the entire front wall,
the second plastic film and the composite paper are attached to each other using a second PU hot-melt adhesive, at least in sections, in the region of overlapping contact surfaces, and the second plastic film is attached to the first plastic film of the composite paper using the PU hot-melt adhesive, at least in sections.

2. The bag of claim 1, **characterized in that**
the second plastic film is attached to opposing side walls of the bag.

3. The bag according to any one of the preceding claims, **characterized in that**
the side of a first section of the composite paper with the first plastic film is attached to the side of a second section of the composite paper with the paper using a second PU adhesive, in particular a PU hot-melt adhesive.

4. The bag according to any one of the preceding claims, **characterized in that**
the second PU hot-melt adhesive is based on using aromatic or aliphatic isocyanates.

5. The bag according to any one of the preceding claims, **characterized in that**
the composite paper and/or the second plastic film are perforated.

6. The bag according to any one of the preceding claims, **characterized in that**
the paper contains a maximum of 10 weight percent of recycled paper, in particular substantially no recycled paper at all.

7. The bag according to any one of the preceding claims, **characterized in that**
the paper is grease-repellent.

8. The bag according to any one of the preceding claims, **characterized in that**
the paper contains at least one epichlorohydrin modified polyamide and/or glyoxal.

9. The bag according to any one of the preceding claims, **characterized in that**
the first plastic film comprises crystallizable bibenzene-modified polyalkene terephthalates and/or polyalkene naphthalates.

10. The bag of claim 9, **characterized in that**
the first plastic layer further comprises a coating layer containing unmodified polyalkene terephthalates, bibenzene-modified and/or unmodified polyalkene naphthalates, or bibenzene-modified and/or unmodified polyalkene terephthalate/polyalkene naphthalate copolymers.

11. The bag of claim 10, **characterized in that**
the degree of crystallinity of the film is lower than 3%, preferably lower than 1%.

## Revendications

1. Sac destiné à recevoir des aliments, en particulier des produits de boulangerie précuits, avec une extrémité de fond essentiellement fermée et une extrémité d'ouverture opposée, comprenant une paroi avant et une paroi arrière qui, dans la zone de leurs bords latéraux et de leurs bords de fond, sont raccordées l'une à l'autre au moins par tronçons, directement ou bien par le biais de parois latérales,
la paroi arrière présentant, au moins par zones, du papier composite, comprenant au moins une première couche d'un papier non siliconé avec un grammage dans la plage de 20 à 150 g/m² et au moins une deuxième couche d'une première feuille en matière plastique transparente ou translucide, constituée en tant que feuille PET, avec une épaisseur moyenne dans la plage de 5 à 50 µm, qui est, au moins par zones, collée avec un adhésif PUR en tant que premier adhésif sur le côté arrière de la couche de papier, caractérisé
en ce quela paroi avant et la paroi arrière et/ou la paroi arrière et les parois latérales dans la zone de fond sont collées avec une colle dispersive, en particulier pâteuse,
en ce que la première feuille en matière plastiquereprésente une feuille en matière plastique monocouche ou multicouche, orientée de façon monoaxiale ou biaxiale,
en ce que le côté du papier composite présentant la première feuille en matière plastique est tourné vers l'intérieur du sac,
en ce que la paroi avant présente dupapier composite, comprenant au moins une première couche d'un papier non siliconé avec un grammage dans la plage de 20 à 150 g/m² et au moins une deuxième couche d'une première feuille en matière plastique transparente ou translucide, constituée en tant que feuille PET, avec une épaisseur moyenne dans la plage de 5 à 50 µm, qui est, au moins par zones, collée avec un adhésif PUR en tant que premier adhésif sur le côté arrière de la couche de papier, et présente par zones une deuxième feuille en matière plastique transparente ou translucide ou
en ce que la deuxième feuille en matière plastique transparente ou translucide forme essentiellement la totalité de la paroi avant,
en ce que la deuxième feuille en matière plastique et le papier composite, dans la zone de faces d'appui se chevauchant, sont au moins par zones raccordés avec un deuxième adhésif thermofusible PUR et
en ce que la deuxième feuille en matière plastique est, au moins par tronçons, raccordée à la première feuille en matière plastique du papier composite par le biais de l'adhésif thermofusible PUR.

2. Sac selon la revendication 1, **caractérisé en ce que**
la deuxième feuille en matière plastique est raccordée à des parois latérales opposées du sac.

3. Sac selon une des revendications précédentes, **caractérisé en ce que**
le côté, présentant la feuille en matière plastique, d'un premier tronçon du papier composite est raccordé au côté, présentant le papier, d'un deuxième tronçon du papier compositeavec un deuxième adhésif PUR, en particulier un adhésif thermofusible PUR.

4. Sac selon une des revendications précédentes, **caractérisé en ce que**
le deuxième adhésifthermofusible PUR est basé sur l'utilisation d'isocyanates aromatiques ou aliphatiques.

5. Sac selon une des revendications précédentes, **caractérisé en ce que**
lepapier composite et/ou la deuxième feuille en matière plastique sont perforés.

6. Sac selon une des revendications précédentes, **caractérisé en ce que**
le papier contient au maximum 10 %-poidsde papier recyclé, en particulier ne présente essentiellement aucune fraction de papier recyclé.

7. Sac selon une des revendications précédentes, **caractérisé en ce que**
le papier est constitué de façon à repousser la graisse.

8. Sac selon une des revendications précédentes, **caractérisé en ce que**
le papier contient au moins un polyamide et/ou glyoxal modifié avec de l'épichlorhydrine.

9. Sac selon une des revendications précédentes, **caractérisé en ce que**
la première feuille en matière plastique comprend des polyalkylènes téréphtalates et/ou polyalkylènesnaphtalates cristallisables modifiés au dibenzène.

10. Sac selon la revendication 9, **caractérisé en ce que**
la première couche de matière plastiquecomprend en outre une couche de couverture, contenant des polyalkylènes téréphtalates non modifiés, des polyalkylènesnaphtalates modifiés au dibenzèneet/ou non modifiés ou des copolymèresde polyalkylène téréphtalates-polyalkylènesnaphtalates modifiés au dibenzèneet/ou non modifiés.

11. Sac selon la revendication 10, **caractérisé en ce que**
le degré de cristallinité de la feuille est inférieur à 3 %, de préférence inférieur à 1%.
